# EUROPEAN PATENT APPLICATION

(11) **EP 4 249 554 A1**
(43) Date of publication of application: **27.09.2023**
(21) Application number: 22163764.8
(22) Date of filing: 23.03.2022
(51) Int. Cl.: C08L 23/10, C08L 23/26

(54) **POLYMER COMPOSITION FOR IMPROVED GRADE PLASTICS FROM RECYCLED MATERIAL**

(71) Applicant: QCP Holding B.V., 6161 RE Geleen (NL)
(72) Inventor: Essers, Francois, 6161 RE Geleen (NL); VENERIUS, Johannes, 6161 RE Geleen (NL)
(74) Representative: IPecunia

(57) **Abstract**

The present invention relates to a polymer composition, comprising:
(a) 60-80 wt% of a recycled polypropylene (rPP);
(b) 0-0.03 wt% of a peroxide;
(c) 3-7 wt% of a heterophasic propylene ethylene copolymer;
(d) 10-30 wt% of a polyolefin elastomer (POE);
wherein components (a) to (d) combine to 100%, and wherein the melt flow rate of component (a) has been increased by reaction with a peroxide to be in the range of 60 to 80 g/10 min. determined according to ISO 1133 at 2.16 kg at 230°C. The invention further relates to a process for forming the polymer composition wherein in a first step the MFR of component (a) is increased by reaction with a peroxide, and in a second step components (a)-(d) are added. The invention further relates to articles made from the new polymer composition.

## Description

### Technical Field

The present invention relates to a new improved polymer composition containing a high amount of recycled polypropylene (PP) and polyethylene (PE). The invention also concerns the use of such polymer composition in the manufacturing of articles, the articles manufactured from said polymer composition and to the process of preparing such polymer composition.

### Background Art

The omnipresence of plastic packaging and the importance of environmental policy have led to the increased importance of recycled plastic materials.

The recycling of paper, textiles, glass or metals is already carried out on a large scale, whether by separate collection or by sorting of the recyclate. The recycling of plastic waste and re-use of plastics is also increasing.

Virgin polymer composition replacement is considered to represent the only way forward to solve the global plastic waste problem, to stop the depletion of natural resources, and to facilitate a circular economy.

To date recycled polymer compositions are available, in the form of flakes or granules, that are obtained from the collection of polyolefin packaging, containers or films are available on the market, wherein the polyolefins are present within the recycled polymer composition at a low percentage of between 5-8 wt% and the remaining between 92-95 wt% of the polyolefins are made-up of virgin polyolefins.

WO2020221756 describes composition obtained from recycled polyolefins.

It remains desirable to prepare products from recycled materials that have a good balance of mechanical properties and optical properties. For example, optical properties like tiger striping, a flow-induced surface defect during injection moulding, is a problem when using virgin material, but increasingly so when using recycled polyolefins.

It is an object of the present invention to define a new polymer composition that can be used to prepare durable consumer products based on 60 wt% or more recycled polyolefins, with significantly reduced tiger striping, excellent molding behaviour and excellent impact strength.

### Summary of the Invention

Accordingly a polymer composition is provided, comprising:
(a) 60-80 wt% of a shifted recycled polypropylene (s-rPP);
(b) 0-0.03 wt% of a peroxide;
(c) 3-7 wt% of a heterophasic propylene ethylene copolymer;
(d) 10-30 wt% of a polyolefin elastomer (POE);
wherein the amount of components (a) to (d) are defined relative to the sum of (a) + (b) + (c) + (d) of the polymer composition, and wherein the melt flow rate of component (a) is in the range of 60 to 80 g/10 min., determined according to ISO 1133 at 2.16 kg at 230°C.

The invention further provides a method for preparing the polymer composition, polymer articles prepared therefrom, and the process of preparing said articles, in particular by injection molding.

Advantage of the polymer composition according to the invention is a unique balance of mechanical properties and flow behavior, resulting in a composition having a high amount of recycled polyolefins with properties that are comparable to or better than virgin materials.

### Detailed description of the invention

The expression "comprising", indicates that the components (a) to (d) must be present in the defined amounts, and that other components such as fillers, colorants and similar additives may be present in conventional amounts, e.g., up to 10 wt% on the total of components (a) to (d). This means that the amounts of components (a) + (b) + (c) + (d) form preferably at least 90 wt% of the polymer composition.

### Component (a): shifted recycled Polypropylene

The shifted recycled polypropylene (s-rPP) is obtained by processing a recycled PP (rPP) with an organic peroxide to a higher melt flow rate and a lower molecular weight.

The rPP raw material comprises plastic waste, predominantly post-consumer waste (PCW) PP packaging waste, such as for example detergent and shampoo bottles, dairy pots and meat trays, etc. The rPP raw material waste can be pre-sorted by waste management companies. One suitable rPP source can for example be the waste material collected under the DSD 324 (05-2012) and DSD 324-1 standard (03-2018).

The rPP DSD 324 (05-2012) raw material can comprise at least one of the following used, residue-drained, rigid, system-compatible items made of polypropylene, e.g. bottles, cups and trays, incl. secondary components such as lids, labels etc. The rPP DSD 324 (05-2012) raw material can comprise a maximum total amount of impurities 6 % by mass. The impurities in the rPP DSD 324 (05-2012) raw material can comprise other metal items < 0.5 % by mass, rigid PE items < 1 % by mass, expanded plastics incl. EPS items < 0.5 % by mass, plastic films < 2 % by mass and other residues < 3 % by mass. Further examples of impurities in rPP DSD 324 (05-2012) raw material can comprise glass, paper, board, cardboard, composite paper/cardboard materials (e.g. liquid packaging boards), aluminised plastics, other materials (e.g. rubber, stones, wood, textiles, nappies) and compostable waste (e.g. food, garden waste).

A second standard for rPP is the PP DSD 324-1 standard (03-2018). This standard is very comparable to the PP DSD 324 standard discussed above, except that the rPP can contain more film material, up to about 10 wt%. This film material comprises both rPP film (such as for example bioriented PP (BOPP)) PE film. The PP DSD 324-1 standard (03-2018) raw material can comprise a maximum total amount of impurities 4 % by mass. The impurities in the PP DSD 324-1 standard (03-2018) raw material can comprise other metal items < 0.5 % by mass, rigid PE items < 1 % by mass, expanded plastics incl. EPS items < 0.5 % by mass, paper, cardboard, carton, composite paper/cardboard materials (e.g. liquid packaging boards) < 1 % by mass, other residues < 3 % by mass. Further examples of impurities in PP DSD 324-1 standard (03-2018) raw material can comprise glass, aluminised plastics, other materials (e.g. rubber, stones, wood, textiles, nappies) and compostable waste (e.g. food, garden waste).

The rPP can contain from 25-75 parts by weight of 100 parts of packaging material (BOPP) and from 75-25 pbw of rubber-containing injection moulded material. This injection moulded material can contain rubbers, such as for example C2-C3 rubber, thermoplastic elastomers (TPE), ethylene propylene diene methylene (EPDM) or ethylene propylene rubber (EPR).

Typically the melt flow rate of a rPP ranges between 10 and 20, determined using the ISO 1133-1:2011, 2.16 kg, T = 230 °C, when no treatment of the rPP has taken place. This MFR turns out to be too low for making a polymer composition having the right balance of properties.

Therefore use of the rPP directly obtained after cleaning the PP from DSD 324, without further treatment, does not result in a polymer composition according to the present invention.

Preferably, the shifted recycled PP used in the present invention has a melt flow rate in the range of 60 to 80 g/10min, determined using ISO 1133-1:2011, 2.16 kg, T = 230 °C.

More preferably the MFR of component (a) is in the range of 65 to 75 g/10 min.

It is essential that the s-rPP has undergone a MFR shift by reaction of rPP with a peroxide before addition of the other components of the composition. If the other components (heterophasic propylene ethylene copolymer and polyolefin elastomer (POE)) would be present during the shifting of the rPP, a composition would be obtained which would not show the right balance of properties.

The shifting of the rPP is preferably carried out with an organic peroxide, more preferably with 2,5-Dimethyl-2,5-di(*tert*-butylperoxy)hexane (CAS 78-63-7). Preferably shifting is carried out with 0.1-0.3 wt% of an organic peroxide. Alternatively the organic peroxide can be present as a masterbatch, wherein the peroxide is dispersed in a polymer like polypropylene (PP). For example 10wt% organic peroxide can be dispersed in 90 wt% PP to provide a 10wt% materbatch. For shifting the rPP, 1-3 wt% of a 10% masterbatch of a peroxide can be used. Other masterbatches can also be used, and the skilled man can easily adjust the quantities of masterbatch needed to shift the rPP to the desired MFR.

Shifting takes typically place in an extruder at temperatures typically between 200 and 270 °C.

Shifting the MFR prior to blending the other components and thereafter combining the s-rPP with heterophasic propylene ethylene copolymer and polyolefin elastomer (POE) was surprisingly found to lead to a product with improved balance of properties, including a reduction in tiger strips, high cold impact, high RT impact, and high tensile strength.

The s-rPP is present between 60-80 wt%, preferably 60-77.5 wt%, more preferably between 62-75 wt%, relative to the sum of (a) + (b) + (c) + (d) of the polymer composition; relative to the sum of (a) + (b) + (c) + (d) of the polymer composition can also be defined as relative to the sum of (a) to (d) of the polymer composition.

### Component (b), peroxide

Optionally the s-rPP, heterophasic propylene ethylene copolymer and polyolefin elastomer (POE) are blended together with a small amount of peroxide, component (b). This component (b) is preferably present as a PP masterbatch, wherein the peroxide may be present in a weight ratio of peroxide to PP of 1:100-1:25, more preferably in a weight ratio between 1:50-1:30 of peroxide to PP. The amount of peroxide component b ranges between 0 and 0.03 wt% (based on wt% peroxide) relative to the sum of components a+b+c+d.

Component (b) should not be confused with the peroxide used for shifting the rPP to s-rPP, carried out before blending the different components to make the polymer composition according to the present invention.

The component (b) can be used for fine tuning the flow properties of the polymer composition of the invention.

Peroxides typically used as crosslinking agent can be used. Preferably an organic peroxide is used. For instance, the peroxide can be 2,5-dimethyl-2,5-di(*tert-*butylperoxy)hexane

(DBPH). The latter is commercially available as Trigonox^{®} 101. Alternatives include 2,5-dimethyl-2,5-di(*tert*-butylperoxy)hexyne-3, dicumyl peroxide and the like.

### Component (c), heterophasic propylene ethylene copolymer

Suitable heterophasic propylene ethylene copolymer are described in US2020339794 and US2020263013, described herein by reference. Preferably it is a copolymer that meets the following conditions:
i) a content of ethylene derived units ranging from 6.0 wt % to 16.0 wt %;
ii) a fraction soluble in xylene at 25°C ranging from 15 wt % to 45 wt %;
iii) an intrinsic viscosity (η) of the fraction soluble in xylene at 25°C. ranging from 4.0 to 9.0 dl/g; and
iv) a melt flow rate, measured according to ISO 1133 at 230° C. with a load of 2.16 kg, ranging from 0.3 to 50.0 g/10 min, more preferable from 0.5 to 5.0 g/10 min.

A suitable example includes LyondellBasell Hifax X 1956 A, which is preferred. Component (c) may be used in amounts varying from 3-7 wt%, preferably 4-6 wt% relative to the sum of (a) to (d) of the polymer composition.

### Component (d), polyolefin elastomer

Component (d) is an ethylene alpha-olefin copolymer (POE). Examples of POE are C₂-C₄ copolymers, C₂-C₆ copolymers and C₂-C₈ copolymers. The POE can preferably be a C₂-C₆ copolymer or a C₂-C₈ copolymer with between 70-80 wt% ethylene, more preferably between 73-78 wt%, most preferably between 74-77 wt%; wherein wt% is relative to the POE.

The POE used in the invention preferably comprises an ethylene (C₂) octene (C₈) metallocene rubber with a blocky structure. The POE preferably has a density of between 0.85-0.89, more preferably between 0.855-0.885, most preferably between 0.86-0.875.

The POE preferably has an MFR of between 0.3-1, more preferably between 0.4-0.8, most preferably between 0.45-0.7 (190 °C, 2.16 kg).

The POE is preferably selected from the group of Infuse or Engage polymers, such as for example Infuse 9107, Infuse 9077 and Engage XLT8677. Infuse 9077, available from DOW, is preferred.

The POE is present at between 10-30 wt%, preferably 15-25 wt%, more preferably at about 20 wt%, relative to the sum of (a) to (d) of the polymer composition.

### Component e) Talcum

The composition preferably contains talcum. The talcum can for example be unmodified and does preferably not have a surface coating or surface treatment. Talcum may also be referred to as talcum in the present application. Talcum can for example be an alpha nucleating agent, such as for example hydrated magnesium-silicate or Steamic 00S DF.

Preferably the talcum is a very finely ground talcum. The inventors found that use of a fine talcum having a D50 of less than 4 micron, preferably less than 3 micron, even more preferably less than 2.5 micron gives an increase in impact and tensile modulus in combination with a recycle PP and acts as a nucleating agent for the composition thereby adding to the mechanical properties of the composition. The D50 is measured by sedigraph, sedimentation analysis, Stokes Law (ISO 13317-3).

The talcum increases the stiffness and strength of the polymer composition and produced articles. The talcum content further impacts the flow of the polymer composition in the molding process, especially in regards to thin walled applications.

The talcum is preferably present at between 1-10 wt%, preferably between 2-5 wt% or between 2.5-4 wt% within the polymer composition. Optimal balance of properties can be achieved with a talcum content between 2.5 and 3.5 wt% relative to the total composition. Amounts of lower than1 wt% talcum do not improve the properties of the composition, while amounts of >10 wt% give a composition having too high density for some applications, and the amount of tigerstripes tend to increase above 10 wt%.

### Additional components

The composition may contain additional components including fillers, colorants, processing aids, but also other polymers and recycle streams.

It is important to remain within the ranges defined above, to achieve a polymer composition that can be ejection molded at typical conditions with excellent mechanical properties and aesthetic appearance. Moreover, it has been found that the order of compounding these components is relevant. In other words, component (a) first has to undergo a shifting reaction with a peroxide, before the additional components are added.

The invention is illustrated by the following examples.

### Examples

A series of experiments have been performed. Experiments 1-3, and 5-7 are comparative examples, wherein a s-rPP is used that has not undergone a pretreatment to shift to the desired MFR, and also no component c (Hifax) was added.

The recipes are provided in Table 1, below.

Experiments C1-C3 show properties with reasonable tiger striping, but the modulus of the materials is rather high, and elongation at break and at yield are far too low, yielding very brittle materials. The Charpy impact is a factor 10 lower than desired. The addition of Kraton rubber from C1 to C2 to C3 improves the Charpy a little, but not enough.

In experiments C5 the amount of DOW infuse 9077 is increased relative to C1-C3, and a rPE is added. As a result the MFR is too low, elongation at break and at yield is too low, and tiger stripes are very high.

Experiment C6 applies a different DOW Infuse 9177, in higher amounts compared to C1-C3. The properties are comparable to experiments C1-C3: too low charpy impact and elongation values. This example shows higher amounts of tiger stripes.

Experiment C7 compares to C5: now 10 wt% Infuse 9177 is applied. Charpy impact is much too low, elongation at break and at yield are too low, and tiger stripes are very high.

It is very difficult to find the right balance of properties.

Surprisingly, the best balance of properties are achieved in Experiments 4(a-d). The elastic behavior, with an E-modulus greater than 800 N/mm² is more than adequate. Impact strength at room temperature and cold temperature is greatly improved.

Moreover, consistently Experiments 4(a-d) provide molded products with no visual tiger stripes or other surface defects.

The results are provided in Table 2, below.

| **Sample** | **Description** |
|---|---|
| QCP PP300U (MFR 70) grey or ivory | Shifted PP, DSD324 circular PP (MFR 10-15, 2.16kg/230°C) |
| QCP PP300t (MFR 50) grey or ivory | Shifted PP, DSD324 circular PP (MFR 10-15, 2.16kg/230°C) |
| LyondellBasell Hifax X 1956 A | Broad molecular weight PP copolymer |
| DOW Infuse 9077 | C2C8 metallocene copolymer (MFR 0.5 g/10min (2.16 kg/190°C) |
| DOW Infuse 9177 | C2C8 metallocene copolymer (MFR 1 g/10min @(2.16 kg/190°C) |
| QCP PE5603 grey or ivory | HDPE DSD329 circular MFR 0.2-1.0 (2.16 kg/190°C) |
| Kraton G1657MS | SEBS (ca. 13% Styrene content, MFR 22 g.10min (2.16 kg/230°C) |
| Steamic OOSd (talc) | Fine talcum |
| Masterbatch Irganox B225 30% | 30% Irganox B225 in PP |
| Exxon Exxelor PE1040 | MAh grafted PE MFR 1 g/10min (2.16 kg/190°C) |
| DBPH 10% on PP | 10% 2,5-Dimethyl-2,5-di(tert-butylperoxy)hexane in PP |

**Table 1**

| **Sample** | | **C1** | **C2** | **C3** | **4a** | **4b** | **4c** | **4d** | **C5** | **C6** | **C7** |
|---|---|---|---|---|---|---|---|---|---|---|---|
| QCP PP300U (MFR 70) grey or ivory | % | | | | 71,0 | 71,0 | 71,0 | 71,0 | | | |
| QCP PP300t (MFR 50) grey or ivory | % | 89,8 | 87,8 | 85,8 | | | | | 69,8 | 89,8 | 69,8 |
| LyondellBasell Hifax X 1956 A | % | | | | 5,0 | 5,0 | 5,0 | 5,0 | | | |
| DOW Infuse 9077 | % | 5,00 | 5,00 | 5,00 | 20,00 | 20,00 | 20,00 | 20,00 | 10,00 | | |
| DOW Infuse 9177 | | | | | | | | | | 10,00 | 10,00 |
| QCP PE5603 grey or ivory | % | | | | | | | | 17,00 | | 20,00 |
| Kraton G1657MS | % | | 2,0 | 4,0 | | | | | 2,0 | | |
| Steamic OOSd (talc) | % | 5,00 | 5,00 | 5,00 | 3,00 | 3,00 | 3,00 | 3,00 | | | |
| Masterbatch Irganox B225 30% | % | 0,20 | 0,20 | 0,20 | 0,50 | 0,50 | 0,50 | 0,50 | 0,75 | 0,20 | 0,20 |
| Exxelor PE1040 | % | | | | | | | | 0,50 | | |
| DBPH 10% on PP | % | | | | 0,50 | 0,50 | 0,50 | 0,50 | | | |

**Table 2**

| **Testing** | | | **C1** | **C2** | **C3** | **4a** | **4b** | **4c** | **4d** | **C5** | **C6** | **C7** |
|---|---|---|---|---|---|---|---|---|---|---|---|---|
| Aging before testing (HDPE 3d/PP 14 d) | | days | 14 | 14 | 14 | 14 | 14 | 14 | 14 | 14 | 14 | 14 |
| Density ISO 1183 (T=23°C) | | - | | | | | | | | | | |
| | Density Average | kg/m³ | 943 | 943 | 941 | 923 | 922 | 922 | 924 | 919 | 912 | 920 |
| | Density standard deviation | kg/m³ | 0,80 | 0,50 | 0,80 | 0,577 | 0,000 | 3,055 | 0,577 | 0,000 | 0,900 | 1,200 |
| Melt Flow ISO 1133 (I 2,16; 230 C) | | - | | | | | | | | | | |
| | MFR | g/10min | 41,4 | 39,9 | 39,4 | 30,6 | 30,7 | 30,5 | 30,3 | 14,5 | 37,4 | 18,6 |
| | MVR | ml/10min | 53,6 | 52,6 | 51,6 | 39,5 | 40,5 | 40,2 | 39,4 | 19,6 | 50,1 | 25,6 |
| | Melt density | g/ml | 0,772 | 0,759 | 0,764 | 0,775 | 0,758 | 0,759 | 0,769 | 0,745 | 0,747 | 0,727 |
| Ash Content compounds | | - | | | | | | | | | | |
| | Ash content | % | 6,04 | 6,12 | 5,91 | 4,09 | 4,03 | 4,08 | 4,07 | 1,46 | 1,31 | 1,29 |
| Charpy (T=23°C, II) | | | | | | | | | | | | |
| | Break type (C/P/N) | - | 5xC | 5xC | 5xC | 10xP | 10xP | 10xP | 10xP | 10xP | 5xC | 5xC |
| | Charpy impact | kJ/m² | 5,68 | 7,21 | 8,33 | 56,41 | 56,27 | 56,2 | 56,7 | 46,11 | 7,82 | 13,74 |
| Charpy (T=-20°C, II) | | | | | | | | | | | | |
| | Break type (C/P/N) | - | 5xC | 5xC | 5xC | 10xC | 10xC | 10xC | 8xC | 10xC | 5xC | 5xC |
| | Charpy impact | kJ/m² | 2,56 | 2,37 | 3,09 | 7,34 | 8,15 | 8,08 | 6,68 | 7,36 | 3,64 | 6,57 |
| Tensile ISO 527/1A (T=23°C, II) | | | | | | | | | | | | |
| | E-Modulus (Chord 0.05% - 0.25%) | N/mm² | 1291 | 1230 | 1162 | 826 | 842 | 830 | 839 | 779 | 1044 | 868 |
| | Tensile Strain at Break (Elongation at Break) | % | 46,6 | 45,4 | 53,4 | 277,8 | 192,9 | 147,7 | 269,1 | 47,5 | 49,4 | 30,9 |
| | Tensile Strain at Yield (Elongation at yield) | % | 6,6 | 6,9 | 7,2 | 7,6 | 7,4 | 7,4 | 7,4 | 10,2 | 7,1 | 8,3 |
| | Tensile stress at Break | N/mm² | 13,0 | 13,1 | 13,7 | 13,7 | 13,1 | 13,1 | 13,6 | 12,2 | 14 | 12,7 |
| | Yield Stress | N/mm² | 23,2 | 22,4 | 21,4 | 16,2 | 16,4 | 16,4 | 16,4 | 17,9 | 22,0 | 19,4 |
| Tiger stripes/Surface defects | | | | | | | | | | | | |
| | High/medium/Low/None | | low | low | low | none | none | none | none | High | medium | high |

| | | | | | | | | | | | | |
|---|---|---|---|---|---|---|---|---|---|---|---|---|
| Charpy is performed according to NEN-ISO 179/eA, molded bar 527/1A | | | | | | | | | | | | |

## Claims

1. A polymer composition comprising:
(a) 60-80 wt% of a shifted recycled polypropylene (s-rPP);
(b) 0-0.03 wt% of a peroxide;
(c) 3-7 wt% of a heterophasic propylene ethylene copolymer;
(d) 10-30 wt% of a polyolefin elastomer (POE);
wherein the amount of components (a) to (d) are defined relative to the sum of (a) to (d) of the polymer composition, and wherein the melt flow rate (MFR) of component (a) ranges between 60 and 80 g/10 min. determined according to ISO 1133 at 2.16 kg at 230°C.

2. The polymer composition according to claim 1, wherein the composition further comprises (e) between 1 and 5 wt% fine talcum.

3. The polymer composition according to claim 1 or 2, wherein the MFR of component (a) is in the range of 65 to 75 g/10 min. determined according to ISO 1133 at 2.16 kg at 230°C.

4. The polymer composition according to any one of claims 1-3, wherein the s-rPP is obtained by shifting a recycled PP, obtained from PP plastic waste collected under DSD 324 (05-2012) and DSD 324-1 standards, with an organic peroxide.

5. The polymer composition according to any one of claims 1-4, wherein the MFR of component (a) has been increased by reaction with of a recycled PP with an organic peroxide, prior to blending components (a) to (d).

6. The polymer composition according to any of the preceding claims, wherein component (a) is present preferably between 60-77.5 wt%, more preferably between 62-75 wt%, relative to the sum of (a) to (d) of the polymer composition.

7. The polymer composition according to any of the preceding claims, wherein component (b) is an organic peroxide, preferably 2,5-dimethyl-2,5-di(*tert-*butylperoxy)hexane (DBPH).

8. The polymer composition according to any one of the preceding claims, wherein the sum of the amounts of components (a) + (b) + (c) + (d) is at least 90 wt% of the polymer composition.

9. The polymer composition according to any of the preceding claims, wherein component (c) meets the following conditions:
i) a content of ethylene derived units ranging from 6.0 wt % to 16.0 wt %;
ii) a fraction soluble in xylene at 25°C ranging from 15 wt % to 45 wt %;
iii) an intrinsic viscosity (η) of the fraction soluble in xylene at 25°C. ranging from 4.0 to 9.0 dl/g; and
iv) a melt flow rate, measured according to ISO 1133 at 230° C. with a load of 2.16 kg, ranging from 0.3 to 50.0 g/10 min, more preferable from 0.5 to 5.0 g/10 min.

10. The polymer composition according to any one of claims 1- 9, wherein component (c) is used in amounts between 4-6 wt% relative to the sum of (a) to (d) of the polymer composition.

11. The polymer composition according to any of the preceding claims, wherein component (d) is selected from C₂-C₄ copolymers, C₂-C₆ copolymers and C₂-C₈ copolymers, preferably a C₂-C₆ copolymer or a C₂-C₈ copolymer with between 70-80 wt% ethylene, more preferably between 73-78 wt% ethylene, most preferably between 74-77 wt% ethylene; wherein wt% is relative to the POE.

12. The polymer composition according to any of the preceding claims, wherein component (d) is present between 15-25 wt%, more preferably at about 20 wt%, wherein wt% is relative to the sum of (a) to (d) of the polymer composition.

13. A process for preparing the polymer composition according to any one of the claims 1-11, wherein in a first step the MFR of component (a) is increased by reaction of a recycled PP, obtained from PP plastic waste collected under DSD 324 (05-2012) and DSD 324-1 standards, with a peroxide to be in the range of 60 to 80 g/10 min. determined according to ISO 1133 at 2.16 kg at 230°C, and in a second step components (a)-(d) are added and blended.

14. An article made from the composition according to any one of claims 1-12.
